# EUROPEAN PATENT APPLICATION

(11) **EP 2 009 903 A1**
(43) Date of publication of application: **31.12.2008**
(21) Application number: 07012575.2
(22) Date of filing: 27.06.2007
(51) Int. Cl.: H04N 5/00, H04N 5/445

(54) **System and method for selecting a media program**

(71) Applicant: Vodafone Holding GmbH, 40027 Düsseldorf (DE)
(72) Inventor: Slegers, Karin, 6227 RM Maastricht (NL); Weisscher, Alard, 6231 LG Meerssen (NL); Markslag, Maurice, 7623 JB Borne (NL)
(74) Representative: Jostarndt, Hans-Dieter

(57) **Abstract**

The invention relates to a system for selecting a media program from a plurality of media programs, wherein an identification string is assigned to each media programl. The system comprises:
- an interface means (112) for accessing the identification strings assigned to the media programs,
- a remote control device (122) having a plurality of input keys (201a, ..., 201j), wherein each of the input keys (201a, ..., 201j) is mapped to a plurality of characters,
- a receiving means (124) for receiving a key input sequence from the remote control device (122),
- an interpretation means (126) connected to the receiving means (124) and the interface means (112), wherein the interpretation means (126) is configured to interpret each key input of the key input sequence as an input of one of the characters mapped to the key (201 a; ...; 201j), to identify at least one identification string of the identification strings assigned to the media programs in response to the received key input sequence and to select a media program assigned to one of the identified identification strings.

The invention further relates to a method for selecting a media program from a plurality of media programs.

## Description

### Field of the invention

The invention relates to a system for selecting a media program from a plurality of media programs, wherein an identification string is assigned to each media program. The invention further relates to a method for selecting a media program from a plurality of media programs using a remote control device comprising a plurality of input keys, wherein each of the input keys is mapped to a plurality of characters.

### Background of the invention

Modern home entertainment systems allow the user to record media programs, such as TV shows or movies, and to store them using title information of the media programs, which may be received together with the media programs. When the user wishes to play back a specific recorded media program, he may select the desired media program using the title information for identifying the media program. Furthermore, so-called audio on demand systems or video on demand systems allow for selecting a media program from a plurality of media programs provided. These systems may be accessed over a network using a so-called set-top-box connected to the entertainment system of the user. The media programs provided for demand are typically also selected using title information for identifying the media programs.

For selecting a specific media program identified by its title information, a list of title information of all available media programs may be displayed to the user and the user may select the desired media program from the list. A remote control of the entertainment device may be used to browse the list of title information and to select a specific media program from the list. However, especially when a large number of media programs is available, browsing a list of the available media programs or title information can be very time-consuming.

Browsing a list of title information may be avoided by entering the title information directly into the entertainment system. For this purpose, a remote control of the entertainment may be used. A remote control usually comprises a reduced keypad, such as a numerical keypad, and each key may be mapped to a plurality of characters to allow for entering the title information.

US 5,953,541 describes a disambiguating system for entering words using a reduced keypad, wherein each key is mapped to a plurality of characters including letters and numbers. Here, keystroke sequences are ambiguous as to their meaning. Therefore, as keys are entered, a vocabulary look-up is performed to determine words that match a keystroke sequence. The words identified from the vocabulary module are displayed to the user in a selection list and the user can select the desired word from the list. A word that is not contained in the systems' vocabulary is entered using a multiple stroke specification method, which requires multiple presses on a key to identify which of the symbols mapped to key is intended. The described disambiguating system can be incorporated in a remote control for a television and used for programming the television or a set-top-box, which is able to access computer resources.

The described system is configured to enter words used in everyday speech and the vocabulary comprises words used in everyday speech. However, title information of media programs often comprise fancy names that are usually not included in such a vocabulary of words used in everyday speech. Therefore, in the described system, title information of media programs will often not be recognised and the user will often have to enter the title information using the multiple stroke specification method, if the system would be used to enter title information for selecting a media program. This can likewise be very time-consuming for the user.

### Summary of the invention

Therefore, it is an object of the present invention to allow for a more reliable recognition of title information of media programs.

This object is achieved by a system according to claim 1 and a method according to claim 14. Embodiments of the system and the method are given in the dependent claims.

According to one aspect of the invention a system of the type specified above comprises an interface means for accessing the identification strings assigned to the media programs, a remote control device having a plurality of input keys, wherein each of the input keys is mapped to a plurality of characters, a receiving means for receiving a key input sequence from the remote control device, an interpretation means connected to the receiving means and the interface means, wherein the interpretation means is configured to interpret each key input of the key input sequence as an input of one of the characters mapped to the key, to identify at least one identification string of the identification strings assigned to the media programs in response to the received key input sequence and to select a media program assigned to one of the identified identification strings.

According to another aspect of the invention a method of the above specified type comprises the steps of assigning an identification string to each media program of the plurality of media programs, providing the identification strings assigned to the media programs; receiving a key input sequence from the remote control device and interpreting each key input of the key input sequence as input of one the characters mapped to the key, identifying at least one identification string of the provided identification strings as response to the received key input sequence and selecting a media program assigned to one of the identified identification strings.

The invention involves the idea that a key input sequence received from the remote control is interpreted as an input of one of the identification strings assigned to the media programs. This allows the user of an entertainment system to select a media program easily by means of the remote control. Furthermore, is possible to recognize every identification string of the media programs, since the identification strings of the media programs are accessed to interpret a keystroke sequence as an input of an identification string.

In one embodiment of the system and the method, a display unit is provided for displaying the at least one identification string identified in response to the received key input sequence.

It is an advantage of this embodiment that the identification strings that have been identified in response to a received key input sequence can be displayed to the user of the system.

A further embodiment allows the user to select one of the identified identification strings using the remote control device.

This embodiment of the system and the method provides, that the remote control device comprises at least one selection key, that one identification string identified in response to the received key input sequence can be selected by actuating the selection key and that the interpretation means is configured to select the media program assigned to the selected identification string. Furthermore, in one embodiment of the system and the method, a list of identification strings identified in response to the received key input sequence is displayed at the display unit, wherein the remote control device comprises at least one key for browsing the list and for selecting an identification string from the list.

In this embodiment the user can select an identification string of a desired media program in a very comfortably way by browsing the list and selecting the identification string from the list using the remote control device.

In general, the identification strings of media programs have different length. Thus, the identification strings identified in response to a received keystroke sequence may comprise complete identification strings, i.e. identification strings whose number of characters corresponds to the number of keystrokes of the keystroke sequence, and identification strings whose number of characters is greater than the number of keystrokes of the keystroke sequence.

In one embodiment of the system and the method, the list is sorted according to the length of the identified identification strings in an ascending order, so that the first entry of the list contains an identification string having the smallest number of characters.

This embodiment has the advantage that the user has a quick access to the complete identification string, in case he wants to select of one these identification strings. Particularly, the user does not have to scroll through the longer identification strings for selecting a short identification string. Longer identification strings may be accessed by providing further keystrokes in the keystroke sequence. Preferably, it is provided that identification strings having a number of characters that is smaller than the number of keystrokes of keystroke sequence are not identified in response to the complete keystroke sequence. Thus, they are deleted from the list on receipt of further keystroke signals and the user can quickly select the longer identification strings via the list without having to scroll through the shorter identification strings.

In a further embodiment of the system and the method, an identification string identified in response to the received key input sequence whose number of characters corresponds to the number of keystrokes of the received keystroke sequence is directly selectable by actuating a key of the remote control device.

This embodiment provides for a quicker and more comfortable selection of an identification string. Preferably, the key that has to be actuated to select the identification string is the selection key of the remote control device.

Another embodiment of the system and the method provides that an identification string identified in response to the received keystroke sequence is directly selectable by actuating a key of the remote control device, if exactly one identification string is identified in response to the received keystroke sequence.

This also allows for a quick and comfortable selection of an identification string in the case in which the identification string has been non-ambiguously determined in response to the received keystroke sequence. Preferably, the key that has to be actuated to select the identification string is again the selection key of the remote control device.

Furthermore, in one embodiment of the system and the method, the interpretation means is configured to recursively determine an identification string in response to a keystroke sequence.

In another embodiment of the system and the method, the identification strings are stored in a tree structure comprising a plurality of nodes to which one input key and a set of identification strings are assigned respectively, wherein the interpretation means is configured to traverse the tree structure according to the input keys pressed in the keystroke sequence and wherein the identification string identified in response to the keystroke sequence is the identification string assigned to the node at which the interpretation means arrives in response to the last keystroke of the keystroke sequence.

It has been found that such a tree structure is especially well suited for the recursive determination of an identification string in response to a keystroke sequence. Particularly, the tree structure allows for an especially quick identification of an identification string that matches a keystroke sequence.

Furthermore, in one embodiment of the invention, the system is connected to a media storage storing the plurality of media programs and the identification strings assigned to the media programs, wherein the interpretation means is configured to retrieve the identification strings from the media storage via the interface means.

In a further embodiment of the system and the method, an input means for entering an identification string and an allocation means configured to allocate the entered identification string to a media program stored in the media storage are provided.

In a related embodiment of the system and the method, the remote control device is usable as input means, wherein a key input sequence corresponding to one or more keystrokes of the same input key is assigned to one character mapped to said input key according to the number of keystrokes of said key, when the identification string is entered.

Furthermore, an entertainment system for playing back a media program selected from a plurality of media programs is provided. The entertainment system comprises a system of the type described before and a playback device for playing back the media program selected by means of the said system.

The aforementioned and other aspects of the invention will also be apparent from and elucidated with reference to the embodiments of the invention described hereinafter making reference to the drawings.

### Brief description of the drawings

Reference will be made by way of example to the accompanying drawings in which
- Fig. 1: is a schematic depiction of an entertainment system for playing back media programs selected according to the invention and
- Fig. 2: is a schematic depiction of a reduced keypad of the remote control device of the entertainment system.

### Detailed description of embodiments

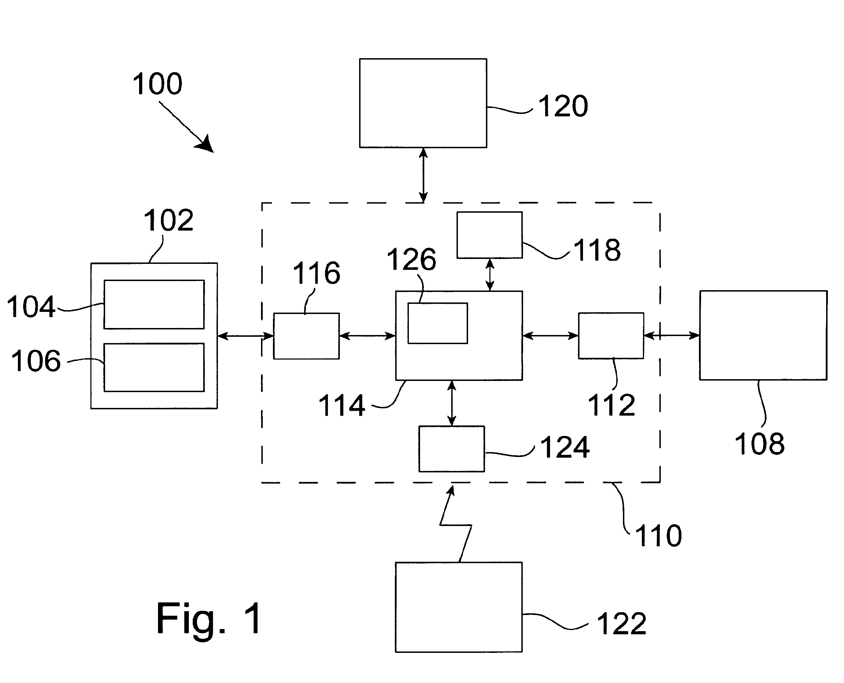

Figure 1 shows a schematic block diagram of an entertainment system 100 for playing back media programs, such as, for example, audio or video programs. The entertainment system 100 comprises a playback device 102 for playing back audio and/or video signals, which comprises a display unit 104 and speakers 106. For example, the playback device 102 may be a television or it may contain a television and a separate audio playback system. The media programs are provided by a media storage 108. The playback of the media programs is controlled by a controller 110, which has a media storage interface 112 for accessing the media storage 108, a processor unit 114 for controlling the operation of the entertainment system 100 and a playback device interface 116 for transmitting audio and/or video signals to the playback device. The processor unit 114 reads audio and/or video data of media programs from the media storage 108 via the media storage interface 112 and transmits the data to the playback device 102 via the playback device interface 116. The input and output signals of the controller 110 are preferably digital signals, which are processed by a software that is run in the processor unit 114. In addition, the controller 110 comprises a memory 118 to which the processor 114 unit has reading and writing access.

The media storage 108 comprises a storage medium for storing audio and/or video data of the media programs as well as metadata related to the media programs. The metadata contain an identification string that allows for a unique identification of the media programs. The identification string consists of alphanumeric characters and may, for example, correspond to a title of the media program. However, the invention is not so limited and the identification string can in general be any character string that allows for an identification of the media program. Via the media storage interface 112, the processor unit 114 can read in the identification strings of the media programs from the media storage 108 and the processor unit 114 is configured to evaluate the identification strings. Furthermore, the processor unit 114 is configured to select a media program that is to be played back by the playback device from the plurality of media programs stored in the media storage 108.

The media storage 108 may be any storage appliance known in the art that is suitable for storing audio and/or video content along with the described metadata. The media storage 108 may include a removable storage medium such as, for example, a DVD or it may comprise a permanent storage medium such as, for example, a hard disk drive (HDD). The media storage 108 may be directly connected to the controller 110 or it may be connected to the controller 110 over a local or wide area network. In one embodiment that uses a direct connection between the media storage 108 and the controller 110, the controller 110 and the media storage 108 form an integrated device such as, for example a DVD player. In another embodiment that uses a connection over a wide area network, the controller 110 may be a so called set-top box that is used in an audio and/or video on demand system.

Furthermore, in one embodiment, the entertainment system 100 allows the recording of media programs that are provided by a source 120, which is connected to the controller 110, in the media storage 108. For example the source 120 may be a television and/or a radio receiver. In this embodiment, the controller 110 receives the audio and/or video data from the source 120 and transmits the data to the media storage 108. The processor 114 controls the recording of the audio and/or video data. Particularly, the processor 114 controls the storage of the metadata including the identification strings of the media programs in the media storage 108. Preferably, the identification string can be input by the user of the entertainment system 100. Likewise, the identification string may provided be by the source 120. However, if the identification string is provided by the source 120, the user of the entertainment system 100 is preferably given the possibility to modify the identification string. The controller 110 and the media storage 108 may be part of an integrated device, which may be configured as a DVD recorder or as a HDD recorder.

Furthermore, the entertainment system 100 comprises a remote control device 122 that is connected to the controller 110 via a remote control interface 124. In one embodiment the remote control device 122 is connected to the controller 110 via a wireless link, which may be an optical link, such as, for example, an infrared (IR) link or which may be a radio link. In this embodiment, the remote control interface 124 includes a corresponding receiver, which may be configured as an IR receiver or as a radio receiver.

The remote control device 122 comprises a plurality of keys for controlling the entertainment system 100. In particular, the remote control device 122 allows the user to input identification strings of media programs that are to be played back by the playback device 102 or that are received from the source 120 and that are to be stored in the media storage 108.

The remote control device 122 further comprises several control keys for controlling functions of the entertainment system 100. The control keys may include keys for starting a playback of a media program, for stopping or pausing the playback or for adjusting the volume of the audio playback. Further control keys that are provided for use in connection with the input of identification strings of media programs are described below.

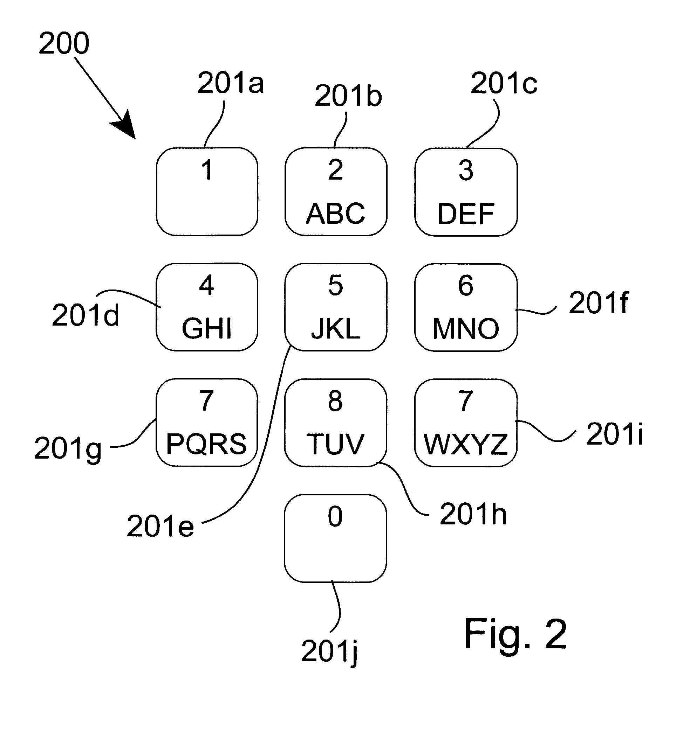

Furthermore, the remote control device 122 comprises a numerical keypad 200, which is schematically depicted in figure 2. The numerical keypad 200 comprises ten keys 201a, ..., 201 j and to each key 201 x a numeral is assigned (The term 201 x is used here to refer to one of the reference numerals 201a, ..., 201j). As shown in figure 2, the numerical keypad 200 may comprise a block with three rows and three keys in each row. To the keys 201 a, ..., 201i in the block the numerals 1 to 9 may be assigned starting with the numeral 1 assigned to the upper left key 201 a and ending with the numeral 9 assigned to the bottom right key 201i of the block. The tenth key 201j, to which the numeral 0 is assigned, may be arranged below the block of three times three keys, preferably below the middle key 201 h of the bottom row.

The numerical keypad 200 may be used for several purposes. For example, in case the source 120 is a television receiver, the numerical keypad 200 may be used to select a television channel that is received in the source 120 in a manner known a person skilled in the art. Furthermore, the numerical keypad 200 is used for inputting identification strings of media programs to select a media program from the media programs stored in the media storage 108 or to enter an identification string that is to be stored along with a media program received from the source 120 in the media storage 108. For this purpose, to several keys 201a, ..., 201 j of the numerical keypad 200 one or more letters are assigned. As shown in figure 2, the numeral and at least a part of the characters assigned to a key 201 x may be imprinted on this key 201 x, so that the user of the entertainment system 100 can easily identify the characters assigned to the keys 201 a, ..., 201j. In addition to the letters, punctuation marks and/or special characters such as, for example, German umlauts or letters with diacritics may be assigned to the keys 201 a, ..., 201 j of the numerical keypad 200. For example, to a key 201 x to which a vowel is assigned the corresponding umlaut may be assigned as well.

When the user actuates a control key of the remote control device 122 or a key 201x of the numerical keypad 200, the remote control device 122 sends a signal to the remote control interface 124 of the controller 110, that is indicative to the actuated key 201 x. The remote control interface 124 transmits the received signal to the processor unit 114. If the actuated key is a control key of the remote control device 122 the processor unit 114 invokes the corresponding function of the entertainment system 100. To control the functions of the entertainment system 100 the processor unit 114 may run a corresponding software that is stored in the memory 118. If the actuated key is a key 201 x of the numerical keypad 200, which is pressed by the user while he enters an identification string of a media program that is to be played back by the playback device 102 or that is to be stored in the media storage 108, the processor unit 114 passes the keystroke signal to an interpretation module 126, which evaluates the signal in a manner described below. Preferably, the interpretation module 126 is also configured as a software module that is stored in the memory 118 und run by the processor unit 114. The allocation between the keys 201 a, ..., 201 j of the numerical keypad 200 and the characters assigned to the keys 201 a, ..., 201 j is stored in the memory 118 and used for the evaluation of the received keystroke signals.

In one embodiment of the entertainment system 100 a graphical user interface (GUI) that is displayed at the display unit 104 of the playback device 102 is provided for selecting a media program for playback. If the entertainment system 100 is configured to record a media program a further GUI for controlling the recording is provided. The preparation of the GUls is performed by interpretation module 126 that sends video signals for displaying the GUls to the display 104 and controls the presentation of the user input in response to the signals the user gives with the remote control device 122.

To start the selection of a media program from the media programs stored in the media storage 108, the remote control device 122 comprise a corresponding control key. When the processor unit 114 receives a keystroke signal that is indicative to this control key, it controls the display 104 to display the corresponding GUI at the display 104. The GUI comprises an input field into which the identification string of the desired media program can be input using the numerical keypad 200 of the remote control device 122. The key input sequences entered by the user are evaluated by the interpretation module 126, which controls the display unit 104 to fill in the input field in response to the key input sequence. The interpretation module 126 provides different modes of operation for evaluating a key input received from the remote control device 122, which will be described below. The manner in which the input field is filled in conforms with the selected mode for inputting an identification string.

If the entertainment system 100 allows the recording of media programs in the media storage 108, a corresponding GUI is provided for entering parameters of the recording, such as, for example, the television channel from which the media program is to be recorded and the time of recording. Furthermore, the GUI comprises an input field that allows to input the identification string under which the media program is to be stored in the media storage 108. As with the selection of a media program stored in the media storage 108, the identification strings are input by the user using the remote control device 122 and key input sequences entered by the user are evaluated by the interpretation module 126, which controls the display unit 104 to fill in the input field in response to the key input sequence. As described before, the interpretation module 126 provides different modes of operation for evaluating a key input received from the remote control device 122 and the manner in which the input field is filled in conforms with the selected mode for inputting an identification string.

The different modes of operation of the interpretation module 126 for evaluating a key input that is given to fill in the input field of one the aforementioned GUIs, will now be described.

In a first mode, which is referred to as multi-tap mode hereinafter, a character assigned to a specific key 201 x of the numerical keypad 200 is determined according to the number of consecutive keystrokes of this key. When the interpretation module 126 is in the multi-tap mode and it receives a first keystroke signal it interprets the signal as an input of first character assigned to key. On receipt of further signals of keystrokes of the same key 201 x the interpretation module 126 changes the input each time it receives a new keystroke signal. In doing this, the input is changed from one character assigned to the key 201 to another character assigned to a key 201 x in predetermined sequence. The first characters in the sequence may correspond to the letters that are imprinted on the key. Thereafter, further characters, which are assigned to key, may follow. For example, when receiving a signal of a keystroke of the key 201 b the interpretation module 126 interprets the signal as an input of the character A. If two further signals of keystrokes of the key 201 b are received, the interpretation module 126 changes the input from A to B on receipt of the first further signal and from B to C on receipt of the second further signal. A further character assigned to the key 201 b may be the umlaut Ä. Thus, when the input has been set to the letter C and the interpretation module 126 receives a further signal of keystroke of the key 201 b the input is changed to A.

After the input has been set to the last character assigned to a key, the input is changed to the first character assigned to the key 201 x again, so that the sequence of the characters assigned to the key 201 x is cycled, if a sufficiently large number of signals of keystrokes of the key 201x is received in succession.

The input of the user is shown in the input field of the active GUI. The input field provides a cursor, which marks the position of the current input. When the GUI is invoked, the cursor preferably is in the leftmost position of the input field marking the position for the input of the first character of an identification string. On receipt of a keystroke signal the input is rendered at the current cursor position. The change of the input on receipt of consecutive signals of keystrokes of the same key 201 x may also be rendered in the input field. The cursor is moved one position to the right, if a signal of keystroke of a further key 201 x is received. Thus, the first keystroke of a key 201x is always interpreted as input of a new character.

Furthermore, the interpretation module 126 checks whether the period between two consecutive signals of a keystroke of the same key 201 x is within a predetermined limit. If this is the case, the input at the current cursor position is changed from one character assigned to the respective key 201x to a further character assigned to this key 201 x as described above. If the period between two consecutive signals of a keystroke of the same key 201 x exceeds the predetermined limit, the cursor is shifted one position to the right and the later keystroke signal is interpreted as the first signal for the input of the next character of the identification string. In addition or as an alternative, the remote control device 122 may provide a control key for shifting the cursor. By actuating this control key the user may manually shift the cursor one position to the right after he has finished the input of a character at a specific position of the input field.

Another mode of operation is referred to as selection mode hereinafter. In the selection mode the user also enters explicitly a desired character into the input field of a GUI at the position of the cursor. When receiving a signal of a keystroke of a key 201 x of the numerical keypad 200 in the selection mode, the interpretation module 126 controls the display unit 104 to display a list of the characters that are assigned to the respective key 201x. The user may then operate the remote control device 122 to browse the list and to select the desired character from the list. For browsing the list, the remote control device 122 comprises corresponding control keys. Particularly, the remote control device 122 may comprise a control key for marking the next entry in the list and a control key for marking to the preceding list entry. When the list is invoked, preferably the first list entry is marked. Thus, after its invocation the user can browse the list to select the desired character using the control keys. Furthermore, the remote control device 122 comprises a control key that is configured as a selection key for selecting a marked entry from the list. When the interpretation module 126 receives a signal of a keystroke of the selection key, it accepts the currently marked list entry as input at the current position of the cursor. Thereafter, the cursor is shifted to the next position.

In one embodiment, it may be possible to switch between the multi-tap mode and the selection mode while an identification string is input in the input field of a GUI. For example, the interpretation module 126 is in multi-tap mode at first, when a new character of the identification string is to be entered. The selection mode may be activated by pressing a key 201 x of the numerical keypad 200 for a predetermined period. Thereupon, the list of characters assigned to the key 201 x used for activation is displayed in the GUI. After a character has been selected in the selection mode, the interpretation module 126 may move the cursor one position to the right and may go back in multi-tap mode. In one embodiment, the selection mode may be provided only for some of the keys 201 a, ..., 201 j of the numerical keypad 200. For example, it may be provided only in connection with a key 201 x to which punctuation marks and other special characters as, for example, brackets are assigned, while it may not be provided for the keys 201a, ..., 201 j to which letters are assigned. The key 201x to which punctuation marks and other special characters are assigned could be, for example, the key 201 a to which also the numeral 1 is assigned.

If the user has actuated a key 201x unintentionally while entering an identification string, particularly if he pressed a key 201x that he did not intend to press, the user can actuate a deletion key of the remote control device 122, whereupon the cursor is moved to the preceding position and the input associated with this position is deleted.

A further control key of the remote control device 122 is configured as a conformation key that is used for signalizing that the input of an identification string has been completed. When receiving a signal of a keystroke, the confirmation key the interpretation module 126 accepts the character string the user has input in the input field of the GUI as the identification string of a media program. If an identification code is input that is to be stored along with a media program, the media program is stored along with the accepted identification string in the media storage. Likewise, the multi-tap mode may be used for entering an identification string of a media program that is to be played back by the entertainment system 100 into the respective GUI. Here, the processor unit 114 searches the media storage 108 to find a media program with the entered identification string. If such a media program is found the processor controls the entertainment system 100 to playback this media program. If no media program with the identification code is found an error message is depicted at the display unit 104 and the user may input a new identification string in the input field of the GUI.

While the multi-tap mode and the selection mode can be used for entering identification strings of media programs that are to be stored and for entering identification strings of stored media programs that are to be selected for playback, another mode of operation of the interpretation module 126 is provided that is only suitable for the latter purpose. In this mode, which is referred to as single tap mode hereinafter, a key 201x of the numerical keypad 200 needs to be pressed only one time to input one of the characters assigned to the key 201 x. On receipt of a keystroke signal sequence the interpretation module 126 identifies the identification string or the identification strings stored in the media storage 108 that match the received keystroke sequence. Thus, the single-tap mode allows for a faster and more comfortable input of identification strings or media programs that are to be played back by the entertainment system 100.

In the single-tap mode, a recursive method is used to determine the identification strings that match a keystroke sequence. On receipt of the first keystroke signal of a keystroke sequence the interpretation module 126 determines a first subset of the set of identification strings stored in the media storage 108 that contains the identification strings whose first character is consistent with one of the characters assigned to the respective key 201 x. On receipt of the signal of the second keystroke of the keystroke sequence, the interpretation module 126 identifies a subset of the first subset that contains the identification strings of the first subset whose second character matches one of the characters assigned to the key 201x pressed in the second position of the keystroke sequence. In this manner, the method continues until the interpretation module 126 has received the signal of the last keystroke of a keystroke sequence. Thus, the method provides, that on receipt of the signal of the n-th keystroke of a keystroke sequence, the interpretation module 126 determines the identification strings from the set of identification strings determined in (n-1)-th step whose n-th character is consistent with one of the characters assigned to the key 201 x pressed in the n-th position of the keystroke sequence.

As in the multi-tap and in the selection mode the identification string is entered into an input field of the GUI that is provided for the selection of a media program for playback. A cursor in the input field marks the position at which a new character is input. When the GUI is invoked the cursor is preferably positioned at the leftmost position of the input field. Each time the interpretation module 126 receives a signal of a keystroke of a key 201 x of the numerical keypad 200, a character is rendered at cursor position and the cursor is moved one position to the right. The character string that is displayed in the input field on receipt of the signal of the n-th keystroke of a keystroke sequence may correspond to the sequence of the first n characters of one the identification strings of the subset of identification strings, which is determined on receipt of the n-th keystroke signal of the keystroke sequence. In a preferred embodiment, the identification strings are sorted according to their length in ascending order to generate a sorted list of identification strings and the first n characters of the first identification string of the sorted list, i.e. the identification comprising the smallest number of characters, are displayed in the input field. If multiple identification strings have the same number of characters, these identification strings may be put in alphabetic order in the sorted list of identification strings.

Furthermore, it is provided that the ordered list of identification strings that is determined on receipt of the signal of a keystroke is depicted within the GUI. For example, the list may be presented within the GUI below the input field. Using the remote control device 122, the user may access and browse the list to select an identification string from the list. Since, in general not all list entries can be presented at the same time the number of list entries may also be presented in the GUI. The presentation of the number of list entries helps the user to decide whether he should browse the list to select an identification string or whether it is preferable to input a further character into the input field. Browsing the list to select an identification string may be advantageous, if the list contains a relatively small number of entries, while inputting a further character into the input field may be advantageous, if the list contains a relatively large number of entries. The remote control device 122 may comprise a control key to access the list. When the interpretation module 126 receives a signal of a keystroke of this control key, it controls the display unit 104 to mark the first entry of the list. In addition, the cursor may be removed from the input field. For browsing the list, the remote control device 122 comprises a control key for marking the next entry in the list and a control key for marking the preceding entry in the list. Furthermore, the remote control device 122 comprises a control key that is configured as a selection key for selecting a marked entry from the list. The keys for browsing the list and for selecting an entry of the list are preferably the same keys that are provided for browsing the list and for selecting a list entry in the selection mode.

If on receipt of a signal of keystroke a subset of the identification strings is determined that contains at least one identification string whose number of characters matches the number of received keystroke signals these identification strings are marked as complete in the depicted list, for example by presenting these identification strings in a special colour. If at least one identification string is determined whose number of characters is consistent with the number of received keystroke signals, particularly the first identification string of the ordered list, which is displayed in the input field, is a complete identification string and may also be marked as complete. Furthermore, if a complete identification string is displayed in the input field, the user can select the identification string by actuating the selection key of the remote control device 122. If the determined subset of the identification strings contains more than one identification string and the number of the characters of all the identification strings in the determined subset is consistent with the number of received keystroke signals, it may be provided that the interpretation module 126 does not accept further signals of keystrokes of keys 201 a, ..., 201 j of the numerical keypad 200, since no further characters can be entered.

If on receipt of one keystroke signal a subset of the identification strings is determined that contains only one identification string, i.e. if the interpretation module 126 has non-ambiguously determined one identification string in response to the received keystroke signals, this identification string is completely displayed in the input field of the GUI. in addition, the identification string may be marked as complete. After the interpretation module 126 has non-ambiguously determined one identification string, the user may select the identification string by actuation the selection key of the remote control device 122. In a further embodiment, it is provided that the interpretation module 126 automatically selects an identification string that has been non-ambiguously determined in response to a keystroke sequence. Furthermore, it may be provided, that the interpretation module 126 does not accept further signals of keystrokes of keys 201 a, ..., 201 j of the numerical keypad 200 after having determined an identification string non-ambiguously.

After an identification string that has been input using the single-tap mode has been selected automatically or manually, the interpretation module 126 accesses the media program that is associated with the selected identification string in the media storage 108 and controls the entertainment system 100 to playback this media program.

If the user has actuated a key 201x unintentionally while entering an identification string, particularly if he pressed a key 201x that he did not intend to press, the user can actuate a deletion key of the remote control device 122, whereupon the cursor is moved to the preceding position and the input associated with this position is deleted. The list depicted in the GUI is likewise set back to the list that was determined on receipt of the last input that has not been deleted.

Furthermore, it may happen that the user input does not match any of the identification strings of the media programs stored in the media storage 108 and that on receipt of a keystroke signal the interpretation module 126 cannot determine an identification string. On receipt of the signal of the n-th keystroke of a keystroke sequence this occurs, if the set of identifications strings determined in response to the foregoing keystroke does not contain an identification string whose n-th character is consistent with one of the characters assigned to the key 201x pressed at the n-th position of the keystroke sequence. In this case, the interpretation module 126 discards the received keystroke signal and controls the display unit 104 to output an error signal, which may be a visual and/or an acoustic signal. The user may then provide a further input at the current position of the cursor.

For the recursive determination of the identification strings in response to the input of a sequence of keystrokes of the keys 201 a, ..., 201 j of the numerical keypad 200 several methods may be used, which will now be described.

In one embodiment, on receipt of the first keystroke signal of a keystroke sequence the interpretation module 126 accesses the media storage 108 and identifies all identification strings whose first character is consistent with one of the characters assigned to the key 201x that has been pressed. Thereupon, these identification strings are stored temporarily in the memory 118 of the controller 110. On receipt of each further signal of a keystroke of the keystroke sequence, the interpretation module 126 adds a mark to the identification strings stored in the memory 118 whose character in the respective position is consistent with one of the characters assigned to the key 201x that has been pressed. The mark also contains the position of the character, which corresponds to the position of the keystroke in the keystroke sequence. Thus, when receiving the n-th keystroke of a keystroke sequence (for n > 2), the interpretation module 126 identifies the identification strings that have been marked on receipt of the preceding keystroke and selects those identification strings whose n-th character is consistent with one of the characters assigned to the key 201 x that has been pressed in the n-th position of the keystroke sequence. Thus, the marks for the n-th position identify the subset of identification strings that is determined on receipt of the n-th keystroke signal of the keystroke sequence. Only for the first position of the identification strings no mark is provided, since the identification strings have been retrieved from the media storage 108 based on their first character.

In principle, it would also be possible to delete the identification strings from the memory 118 whose n-th character is not consistent with one of the characters assigned to the respective key, when receiving n-th keystroke signal of a keystroke sequence. However, by marking the identification strings in the manner described before, the interpretation module 126 is able to go back in the recursion. Particularly, this is necessary, when the user deletes one or more positions in the input field. In this case, the marks associated with the deleted positions in the input are also deleted.

In another embodiment, the identification strings are stored in the media storage 108 in a tree-like data structure. The structure contains nodes that are arranged in several levels. Each node in a specific level is linked to zero or at least one node in the next higher level, which is usually called its child node. The node in next lower level that is connected to specific node is usually called the parent node of the specific node. The lowest level contains only one node, which is usually referred to as root node and which is linked to every node of the second highest level. In the following, the highest level containing the root node is referred to as level of order zero, the second highest level is referred to as first level, the third highest level is referred to as second level etc. In other words, the order of a level corresponds to the steps for arriving at a node in this level starting from the root node.

The root node is of the tree structure preferably corresponds to the initialization of an evaluation of a keystroke sequence and the tree is constructed in such a way that each path trough the tree corresponds to a valid keystroke sequence, i.e. a keystroke sequence that matches at least one the identification strings of the media programs stored in the media storage 108. For this purpose, in an exemplary embodiment, the number of the nodes in the first level of the tree structure is consistent with the number of keys 201 a, ..., 201 j of the numerical keypad 200. A key 201 x and a set of identification strings whose first character matches one of the characters assigned to that key 201 x are assigned to each node of the first level. If there is no such identification string, i.e. if an empty set is assigned to a node, the respective node is provided with an error code. Furthermore, each node of the first level and of the higher order levels to which exactly one identification code is assigned does not have any child nodes. Likewise, each node of the first level and of the higher levels to which solely identification strings are assigned whose number of characters is consistent with the order of the level of the node does not have any child nodes. All other nodes in the first level and in any higher level have one child node in the next higher level for every key 201x of the numerical keypad 200. To each of these child nodes, a subset of the set of identification strings assigned to its parent node is assigned whose character in the position that corresponds to the order of the child node is consistent with one of the characters assigned to the respective key 201 x. Thus, for n > 0 to each node in the n-th level of the tree a specific key 201x is assigned along with a subset of the identification strings whose n-th characters is consistent with the characters assigned to the specific key 201 x.

On receipt of n-th keystroke signal of keystroke sequence, the interpretation module 126 selects the node of the n-th level that is assigned to the key 201 x to which the keystroke signal refers. The identification strings assigned to this node are depicted in a sorted list in the GUI and the first n characters of the first list entry are displayed in the input field. If exactly one identification string is assigned to the node this identification string is completely displayed in the input field and marked as complete. If at least two identification strings are assigned to the node, the interpretation module 126 checks, whether the node has any child nodes. If this is not the case, the identification strings assigned to the node and depicted in the sorted list are marked as complete. The first entry of the list is again displayed in the input field and also marked as complete. As explained above the interpretation means may not except further signals of keystrokes of keys 201 a, ..., 201 j of the numerical keypad 200, if solely complete identification strings are determined in response to a keystroke signal. This corresponds to the situation in which the interpretation module 126 arrives at a node of the tree structure that does not have any child nodes. Hence, if such a node is selected on receipt of the n-th keystroke sequence the cursor of the input field is not moved. However, if a node is selected that has child nodes, the cursor is moved to next position in the input field to receive the next character input of the user.

If the user deletes the character at the n-th position of the input field, the interpretation module 126 goes from the selected node of the n-th level to its parent node in the (n-1)-th level. Thereafter, it controls the display unit 104 to display a sorted list of the identification strings assigned to the parent node. The first n-1 characters of the first identification string in the list are displayed in the input field and the cursor is positioned at the n-th position in the input field.

Compared to the embodiment described before, the use of the tree-like data structure for storing the identification strings of the media programs stored in the media storage 108 allows for a faster determination of the identification strings matching a keystroke sequence. This advantage is due to the fact that no identification strings need to be selected from the identification strings stored in the media storage 108. Rather, only nodes of the tree structure have to be selected. Furthermore, the identification strings may already be assigned to the nodes in the ordered form and, if applicable, the identification strings assigned to the nodes may already be marked as complete. This reduces the computing power, which is necessary for evaluating a keystroke sequence and accelerates the evaluation.

## Claims

1. A system for selecting a media program from a plurality of media programs, wherein an identification string is assigned to each media program, the system comprising:
- an interface means (112) for accessing the identification strings assigned to the media programs,
- a remote control device (122) having a plurality of input keys (201 a, ..., 201j), wherein each of the input keys (201 a, ..., 201j) is mapped to a plurality of characters,
- a receiving means (124) for receiving a key input sequence from the remote control device (122),
- an interpretation means (126) connected to the receiving means (124) and the interface means (112), wherein the interpretation means (126) is configured to interpret each key input of the key input sequence as an input of one of the characters mapped to the key (201 a; ...; 201j), to identify at least one identification string of the identification strings assigned to the media programs in response to the received key input sequence and to select a media program assigned to one of the identified identification strings.

2. The system according to claim 1, further comprising a display unit (104) for displaying the at least one identification string identified in response to the received key input sequence.

3. The system according to claim 1 or 2, wherein the remote control device (122) comprises at least one selection key, wherein one identification string identified in response to the received key input sequence can be selected by actuating the selection key and wherein the interpretation means (126) is configured to select the media program assigned to the selected identification string.

4. The system according to one of the preceding claims, wherein a list of identification strings identified in response to the received key input sequence is displayed at the display unit (104) and wherein the remote control device (122) comprises at least one key for browsing the list.

5. The system according to claim 4, wherein the list is sorted according to the length of the identified identification strings in an ascending order, so that the first entry of the list contains an identification string having the smallest number of characters.

6. The system according to claim 4 or 5, wherein an identification string identified in response to the received key input sequence whose number of characters corresponds to the number of keystrokes of the received keystroke sequence is directly selectable by actuating a key of the remote control device (122).

7. The system according to one of the preceding claims, wherein the identification string identified in response to the received keystroke sequence is directly selectable by actuating a key of the remote control device (122), if exactly one identification string is identified in response to a received keystroke sequence.

8. The system according to one of the preceding claims, wherein the interpretation means (126) is configured to recursively determine an identification string in response to a keystroke sequence.

9. The system according to one of the preceding claims, wherein the identification strings are stored in tree structure comprising a plurality of nodes to which one input key and a set of identification strings are assigned respectively, wherein the interpretation means (126) is configured to traverse the tree structure according to input keys (201 a; ...; 201 j) pressed in the keystroke sequence and wherein the identification strings identified in response to the keystroke sequence are the identification strings assigned to the node at which the interpretation means (126) arrives in response to the last keystroke of the keystroke sequence.

10. The system according to one of the preceding claims, wherein the system is connected to a media storage (108) storing the plurality of media programs and the identification strings assigned to the media programs and wherein the interpretation means (126) is configured to retrieve the identification strings from the media storage (108) via the interface means (112).

11. The system according to one of the preceding claims, further comprising an input means for entering an identification string and an allocation means (114) configured to allocate the entered identification string to a media program stored in the media storage (108).

12. The system according to one of the preceding claims, wherein the remote control device (122) is usable as input means and wherein a key input sequence corresponding to one or more keystrokes of the same input key is assigned to one character mapped to said input key according to the number of keystrokes of said key when the identification string is entered.

13. An entertainment system (100) for playing back a media program selected from a plurality of media programs, comprising a system according to one of the preceding claims and a playback device (102) for playing back the media program selected by means of the said system.

14. A method for selecting a media program from a plurality of media programs using a remote control device (122) comprising a plurality of input keys (201 a, ..., 201j), wherein each of the input keys (201a, ..., 201j) is mapped to a plurality of characters, the method comprising the steps of:
- assigning an identification string to each media program of the plurality of media programs,
- providing the identification strings assigned to the media programs;
- receiving a key input sequence from the remote control device (122) and interpreting each key input of the key input sequence as input of one the characters mapped to the key (201 a; ...; 201j),
- identifying at least one identification string of the provided identification strings as response to the received key input sequence and
- selecting a media program assigned to one of the identified identification strings.
